# EUROPEAN PATENT SPECIFICATION

(11) **EP 1 842 117 B1**
(45) Date of publication and mention of the grant of the patent: **05.05.2010**
(21) Application number: 05709184.5
(22) Date of filing: 20.01.2005
(51) Int. Cl.: G05D 1/02

(54) **AUTOMATICALLY DRIVEN CART FOR TRANSPORTING OBJECTS, IN PARTICULAR ON GOLF COURSES**
AUTOMATISCH ANGETRIEBENER WAGEN ZUM TRANSPORT VON OBJEKTEN INSBESONDERE AUF GOLFPLÄTZEN
VOITURETTE AUTOMATIQUE POUR LE TRANSPORT D'OBJETS, NOTAMMENT SUR DES TERRAINS DE GOLF

(43) Date of publication of application: 10.10.2007
(73) Proprietor: O.M.G. S.R.L., 56030 Cascine di Buti (IT)
(72) Inventor: SPIGAI, Alberto, I-56032 Buti (IT)
(74) Representative: Gritschneder, Martin
(86) International application number: PCT/IT2005/000027
(87) International publication number: WO 2006/077605

(56) References cited:
- CH-A5- 683 128
- DE-A1- 4 117 540
- DE-B3- 10 325 246
- US-A- 5 151 701
- US-A1- 2003 030 398
- US-A1- 2004 260 467

## Description

### TECHNICAL FIELD

The present invention refers to a cart for transporting goods and objects, in particular on golf courses.

Specifically, the invention concerns the automatic driving modes and means of a cart for transporting objects and goods in various environment.

### STATE OF THE ART

The usage of carts suitable to automatically transport objects and goods is spreading in several sectors thanks to the growth of the technologies requested for their realization.

For example in US 2003/0030398 A1 is disclosed a very efficient method of utilizing a robot system for commanding it to perform specific functions in a mapped area. The claimed robot system is provided with a full range of utilities and devices apt to let it perform the functions assigned in a completely automatic manner even if, actually, the patent application does not disclose in a very reliable manner the way such utilities and devices are implemented to complete the requested functions. In any case, the complexity of such a robot system makes it not suitable for many applications in which a higher simplicity is desired in order to effectively reduce the global costs of the apparatus.

In the specific sector of carts for transporting objects the development of the microcomputer based electronics has allowed to design algorithms which are enough complex to suitably control the electric motors, usually supplied by onboard accumulators, and the cart's driving means in order to obtain the proper driving of the cart itself towards a specific reference signal emitting source.

In a previous patent application, n. EP 1210260 filed by the same applicant, it was disclosed and claimed, for instance, a cart dedicated to transporting clubs, accessories and other objects on golf courses; cart in which groups of sensors are provided to detect the position of an external source, worn by the golf player, of ultrasonic signals, and other groups of sensors dedicated to detect obstacles laying along the path of the cart.

The signals detected by said sensors are processed by a microcomputer central unit which interfaces with the sensors and the motor's electronic control unit or units, according to an algorithm apt to lead the cart close to the external ultrasonic signal source. Said central microcomputer unit controls the steering units and/or each possible electric drive motor as a function of which sensor detected the signal emitted by the external source and also as a function of the distance between the sensor and the external source, measured through the time elapsed among the emission and the detection of the signals.

Surely, such a designed cart provides automatic operating performances which are far better then the ones of previous carts based upon the usage of radio signals as, for example, the cart claimed in US-A-4,109,186, which provides receivers of electromagnetic signals coming from a source connected to the user, said receivers being suitably distanced and mounted on said cart. In this case the guidance of the vehicle is very difficult because it is performed by means of the differences among the energy levels of the signals received by the receivers, thus, being the receivers too close one to another, said differences are not enough to be reliably detected and processed.

A further example of automatic driven cart, still in the golf sector, based upon the usage of radio signals, is disclosed in US-A-5,711,388, regarding a self-directed robo-cart able to store maps and navigation instructions and also able to interact with a global surveillance system in order to attend the player all along the golf course. Though we have, with respect to the previous case, collateral advantages, also in this case, however, when the cart directly interacts with the user, the same problems of the previous solution arise, in accordance to the fact that, even in this case, the directional detection of the radio signals emitted by an emitter carried by the player is required to determine its positions. A different example of a partially automatic driven cart for the golf sector is disclosed in US 2004/260467, in which a golf cart location in a golf court is determined through a GPS in order to prevent access of the cart itslef in specific restricted areas. When a prohibited access is detected the cart is automatically controlled to slow down or to stop. It is clear that in this case only few driving functions of the cart are automatically monitored and controlled.

In view of the above, the solution disclosed in patent EP 1210260 is at the present time a very reliable solution to automatically drive a cart for transporting object, in particular on golf courses.

Anyway, it meets some limitations depending just on the field of use, the golf courses, where it works quite effectively while, in case it is used indoor, problems related to the detection of the source signal may come from the possible reflections of the signal itself.

Further limitations may come from the relative position between the cart and the external source, relative position which is too constraining in the above cart, and from possible interference with different external sources belonging to different carts.

### SUMMARY OF THE INVENTION

Aim of the present invention is to propose an automatic driven cart for transporting objects and other items in different environments, both indoor and outdoor.

Further aim of the invention is to propose a cart for the automatic transport of objects and various goods in which is extremely easy and immediate to define and to maintain any mutual position between cart and its external source.

Another aim of the invention is to propose a cart for the automatic transport of objects and various goods suitable particularly to the use on the golf courses.

The aforesaid purposes and other more are reached, according to claim 1, through a cart of the type comprising:
- at least an electric traction motor associated to at least a wheel of said cart, said motor being fed by a set of accumulators installed on board of the cart and being controlled through an electronic speed regulator ,
- a series of ultrasonic sensors apt to detect the signals coming from an external source of signals;
- a microcomputer control unit which interfaces with said sensors and with said electronic regulator of speed to pilot said at least one electric traction motor;
said cart being characterized by the fact that said series of sensors include at least three separate sensor units distributed on said cart, and that said microcomputer control unit is apt to determine the position of said cart in comparison to said external source through the processing of data relating to the signals detected by at least two of said sensor units, by performing, particularly, the trigonometric calculation of the position of said source in comparison to said sensor units.

The aforesaid sensor units are shaped and located in such position to monitor every point of the area surrounding the cart. For a cart having a rectangular shaped plant, each of the above units is composed of couples of sensors situated adjoining each other in directions among them perpendicular, said units being preferably in number of four, placed at each the four corners of the cart; the trigonometric calculation of the position of the cart in comparison to the external source is effected by processing the data relating to the signals detected by three of said sensor units. In the elaboration algorithm are, particularly, rejected possible wrong calculations due to reflections of the reference signal or to various interferences.

Alto possible interferences of similar carts, working in the same area, are overcome thanks to the coding of the signal activating of the external source and to the exact definition of the time interval of transmission of the source signal of each of the carts, opportunely separate and different with respect to the time interval of transmission of the other carts.

The advantages relating to the cart of the invention are immediately clear in consideration of the effectiveness of the algorithm of elaboration used for the determination of the position of the cart in respect of its external source, algorithm from which comes down the maximum flexibility of guidance of the cart and, at the same time, the elimination of interferences or detection errors.

### BRIEF DESCRIPTION OF THE DRAWINGS

For better understanding, however, the characteristics of the present invention and the related advantages, will be described, in the following, an embodiment of the same, by the help of the enclosed drawings, in which:
- figure 1 is a perspective view in which the structural scheme of the main mechanical and electrical components of the cart of the invention is shown;
- figure 2 shows a further global perspective view of the cart of fig.1 in a particular configuration in which the rod supporting the control board lays in reclined position;
- figure 3 shows a front view of the control board of the cart of fig.1;
- figure 4 shows a side view of the source of ultrasonic signals associated to the cart of the invention;
- figure 5 shows a top view of the source of ultrasonic signals of fig.4;
- figure 6 shows a top view of one of the ultrasonic sensor units associated to the cart of fig.1;
- figure 7 shows a flow chart relating to the algorithm of determination of the position of the cart in respect to the position of its source of ultrasonic signals;
- figure 8 shows a timeline chart schematically displaying the time intervals of determination of the single positions of various carts in respect of relative sources of ultrasonic signals, in presence of various carts in a same area;
- figure 9 shows a flow chart relating to the algorithm of activation of the procedure used to determine the position of the external source associated to the cart of the invention, in case of presence of other carts in a same area.

### DESCRIPTION OF PREFERRED EMBODIMENTS

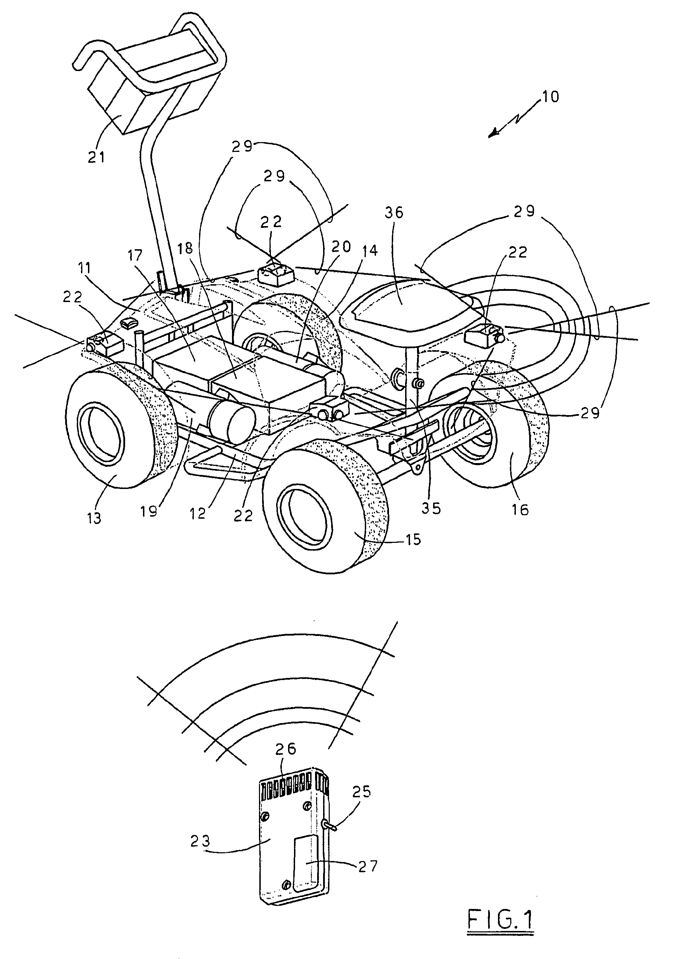

Witch reference to fig.1, it is pointed at, as a whole, with 10 a cart according to the present invention, whose lay-out of the principal components is illustrated in marked line, while is represented in light line the external covering structure, 11.

As we can notice, to a tubular chassis, 12, having a substantially rectangular shaped plant, the two back wheels, 13, 14 and the two anterior wheels, 15, 16, of the cart are bound.

In the back part of the cart itself, among the two wheels 13, 14, are fixed two accumulator sets, 17, 18 which feeds, besides various subsidiary parts, two electric traction motors, 19, 20 which, in this embodiment of the invention, make rotate, through suitable transmission means, the back wheels, 13, 14.

Said traction motors are controlled by electronic regulator in turn controlled by a microprocessor control unit, 21, also fed by the energy accumulation set constituted by the batteries, 17, 18.

The processing unit, 21, also controls the steering system, for simplicity not represented in figure, and the sensor units, 22, dedicated to the receipt of the ultrasonic signals coming from an external source, 23. Finally, the unit 21 is also dedicated to the control of further sensors and systems, which, for instance, the systems of detection of possible obstacles.

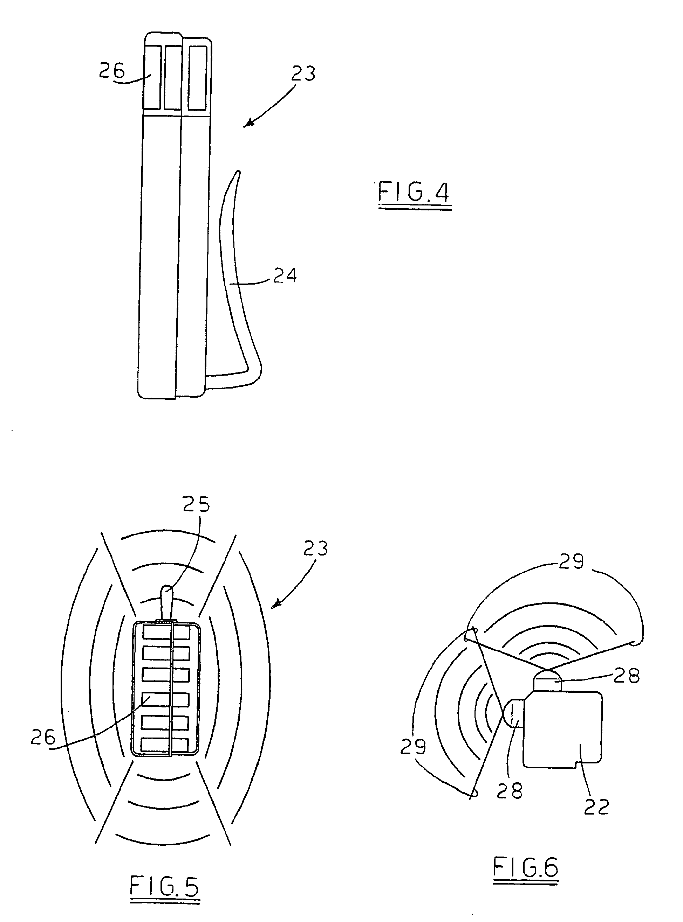

The external source, 23, shown in detail in figs. 4 and 5, is associated to the position of the player, in the case of use of the cart on golf courses, or in general to the position of the user of the cart; it can be easily transported through the hook 24, through which it can be fixed to the clothes of the user. Said external source is provided with an electric switch, 25, activating a unit able to receipt radio frequency signals sent forth by a transmitting station associated to the cart, and also activating a source of ultrasonic which, thanks to the particular structural conformation, is able to emit, through the loopholes, 26, with an angle of action practically of 360 degrees.

Said external source, 23, is fed by batteries positioned in a special hollow of placement, 27, provided in the body of the same device 23.

The sensor units, 22, are, in this embodiment of the invention, in number of four, located at the four corners of the cart, so that to assure that, also in presence of objects settled on the cart, at least three of them receive the ultrasonic signal from the external source; they, in addition, are bound to the upper part of the chassis 11, so that to get a "range of visibility" the amplest possible. Said sensor units comprise, in this case, couples of sensors, 28, well shown in fig.6, perpendicularly disposed the one in comparison to the other and turned toward the outside of the cart, 10.

The position of the sensors, 28, is such that, inside their working range, every point where the ultrasonic source, 23, may be, is detectable by at least two of said sensors, as schematically indicated by means of lines 29 of fig. 1, that show the working range of each of the sensors.

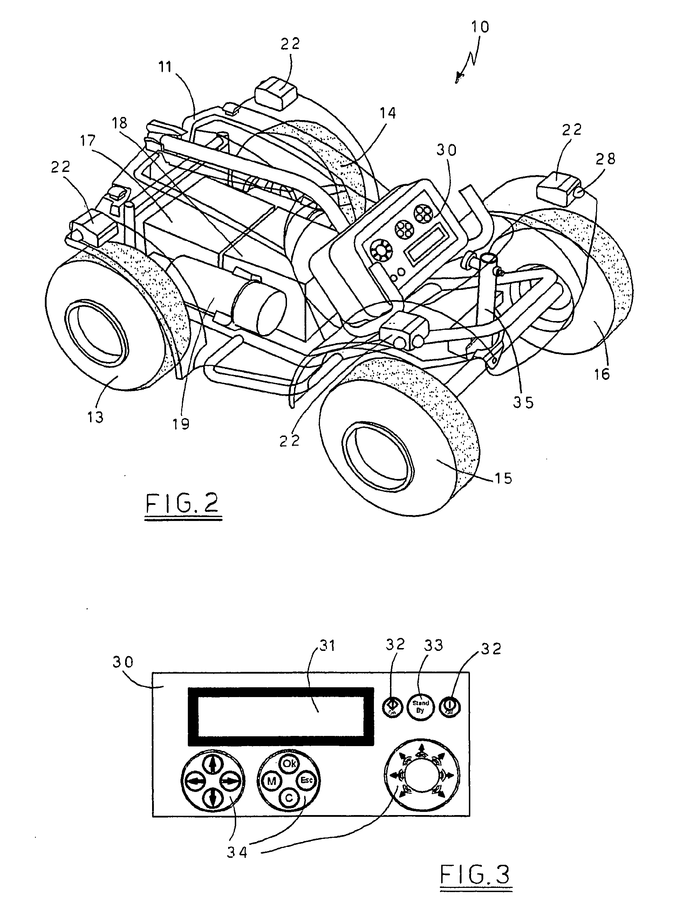

As we can see in fig.2, and more in detail in fig.3, in correspondence to the microcomputer unit, 21, a control board, 30, is situated, acting as an interface between the user and the unit 21 itself. Through said board it is possible to set the distance between the cart and the source 23, in addition to the mutual position among the two; position that the cart has to maintain during the whole functioning or up to a following setting.

Particularly, on the control board, 30, we find a display, 31, for the visualization of the inserted data and other information on the working mode of the cart itself; there are, furthermore, powering on and off switches, 32, stand by switches, 33, and a further series of buttons, 34, through which it is possible to set the aforesaid distance and mutual position between cart and eternal source, in addition to control, obviously, every possible utility functions of the cart.

We can notice that in figs. 1 and 2 is shown, as a particularly useful utility for the transport of small objects, a vertical arm, 35, of adjustable height, that supports, in this embodiment, a shelf, 36.

Obviously, different or further typologies of accessories could be provided in relation to the specific sector of employment of the cart.

The cart of the invention operates as described in the followings.

Once activated the control unit 21, are set, through the control board 30, the distance and the position that it is desired that the cart, 10, maintains in comparison to the position of its external source, or transponder, 23. The transponder, 23, is then turned on, through the switch, 25, and it results to be able to receive radio frequency signals sent forth by a transmitting unit controlled by the control unit 21. The activation of the transponder, and, therefore, the emission of ultrasonic signals, happens only after the receipt of signals containing a specific activation code, exclusively typical of the cart, 10, to which the transponder, 23, is associated.

The ultrasonic signals emitted by the transponder 23 are received by the sensor units, 22, and transmitted to the control unit, 21, by which are processed and, as a function of said signals, the control unit itself then controls the guidance systems of the cart and, particularly, the steering system and the regulating system of the electric motors, 19, 20, to reach the position with respect to the external source, 23 and the distance from the same one which had been previously set.

The control parameters to be sent to the guidance system are calculated as a function of what sensors received the signal and as a function of the time interval departed among the emission from the transponder, 23 and the receipt from the sensor units, 22.

Particularly, thanks to their particular location, there are at least two sensors that time by time detect the signal. This allows the processing unit, 21, to establish the position of the source, 23, in comparison to the cart's position, through precise trigonometric calculations. In fact, as a function of the time interval departed between the transmission of the radio frequency activation signal and the receipt of the ultrasonic signal by a specific sensor, the distance from said sensor, 28, to the transponder, 23 is estimated. Trigonometrically elaborating, therefore, the distances relating to at least two different sensors, it is possible to establish the position of the external source 23 in comparison to the cart's 10 position in a sufficiently exact way in the case said two sensors results not to be lined up with the external source. Particularly, using for the trigonometric calculation, the detected distances of three sensors in respect of the transponder, the mutual position cart / transponder is univocally determined, any is the alignment of the sensors with respect to the external source.

It is to consider that the execution of the aforesaid trigonometric calculation of the position can terminate in wrong results following spurious, or however not congruent, detections effected by the sensors. For instance, in presence of obstacles, or indoor, the ultrasonic signal would not be able to reach a sufficient number of sensors to allow an exact calculation of the position, or it could reach them as a reflected signal.

To avoid the above problem and to make, therefore, particularly reliable the guidance of the cart, is implemented in the processing unit, 21, a specific algorithm thanks to which is established if can be adopted or not the position calculated as a function of the signals received by the sensor units, 22.

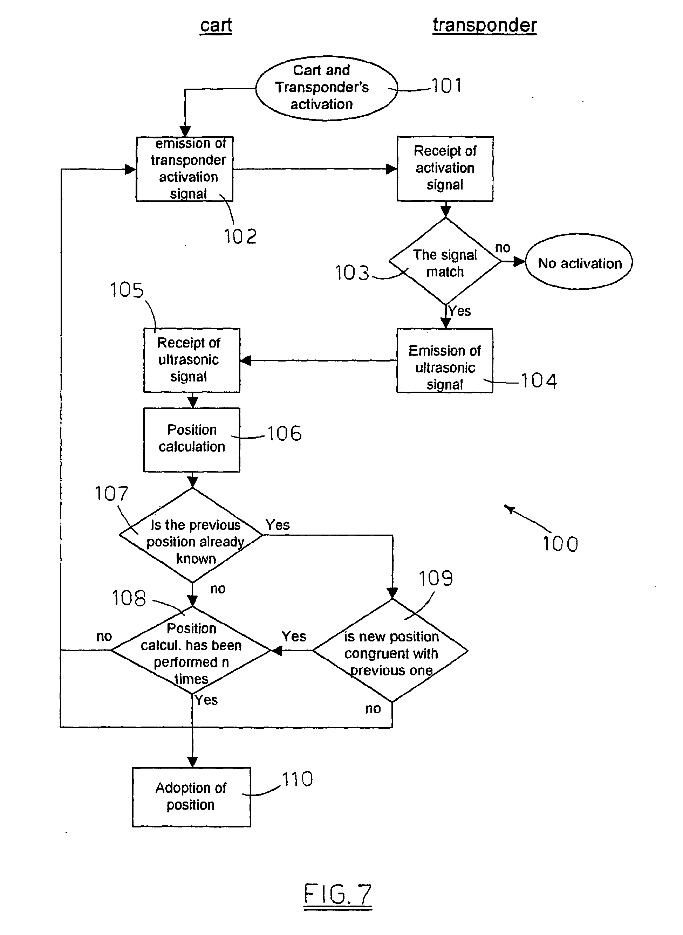

This is illustrated in the flow chart, 100, of fig.7. During the activation, 101, of the cart 10 and of the transponder 23, the processing unit, 21, sends forth a radio frequency signal, phase 102, bringing a specific code, peculiar of that cart. The transponder 23, receiving the radio frequency signal, verifies, phase 103, if this brings its activation code, and it sends forth, if matching, an ultrasonic signal, phase 104. Said ultrasonic signal is then received, phase 105, by the sensors, 28, displaced on the cart, 10, and if the receiving sensors are at least in number of two, the unit, 21, proceeds to the trigonometric calculation of the mutual position between cart and transponder, phase 106.

In the case that such calculation has been effected for the first time after powering on the cart, the microcomputer unit 21 sends forth a new request of ultrasonic signal's emission by the transponder, then it proceeds again to the calculation of the position, and this repeats for a pre-detennined number of times, phases 107 and 108, normally seven / eight, so that it is finally adopted as valid the position that results from the aforesaid calculations for the greatest number of times. Once determined the mutual position cart / transponder, the following procedure of calculation of a new position, takes place, as we will see in detail in the following, after a datum time "T" is elapsed since the beginning of the procedure of calculation above described.

Instead, in the case that the calculation of the position is not the first one after powering on, and that therefore it is already known a mutual position cart / transponder thanks to a previous procedure of determination of the position itself, the processing unit, 21, effects a control of congruence, phase 109, of the previous position with the new calculated position, before adopting as valid this last, phase 110. Such congruence is verified as a function of the distance between the last calculated position and the one previously determined and stored, and as a function, also, of the elapsed time between the two procedures of calculation performed for the determination of such positions, keeping in mind that the cart's speed with respect to the speed of its transponder cannot overcome a datum value depending on the maximum speed of motion of the transponder's user and on the maximum speed of the cart itself.

The above described algorithm of adoption of the mutual position between cart and transponder allows to maintain the cart itself in the position previously set, in very reliable way, also when used indoor, where the sensor units, 22, may receive a very large number of reflected signals.

The further limitations of use of the prior art automatic guided carts working through ultrasonic signals, limitations due to the impossibility to use more carts contemporarily in a same area, as the ultrasonic signals sent forth by the transponder, 23, associated to a specific cart, 10, can be detected also by the processing units, 21, of other carts operating in the same area, are overcome in the cart of the present invention thanks to a specific algorithm, implemented in the processing unit, that allows the separate activation of the various transponders, 23, operating in the area, according to a determined order, so that the signals sent forth by them do not overlap and can be therefore received and processed only by the carts to which they are associated.

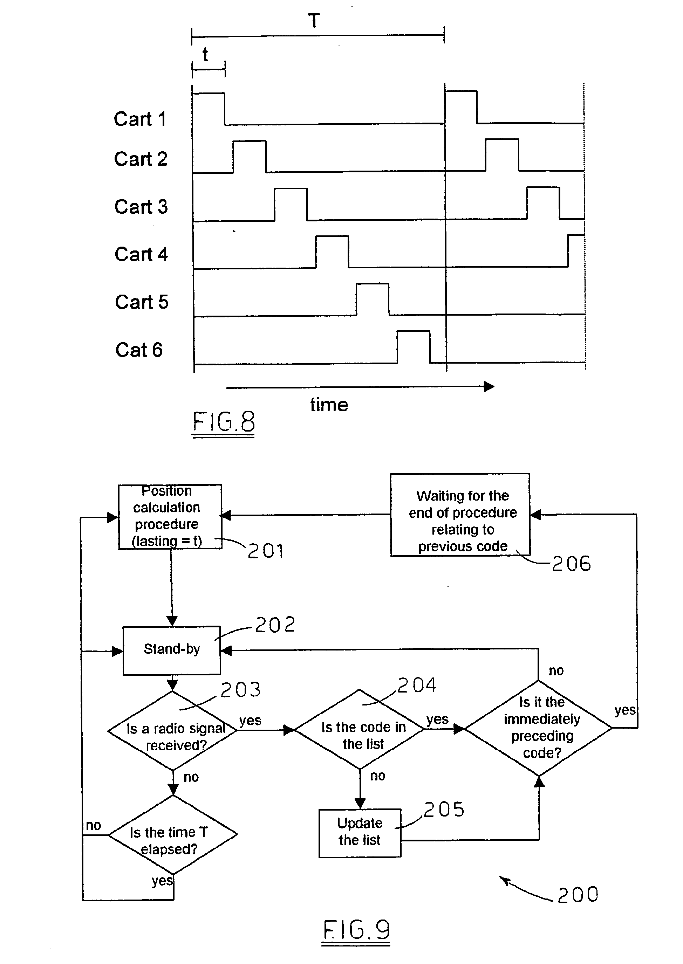

Such algorithm, shown in the flow chart, 200, of fig.9, provides that at the end of the procedure of determination of the mutual position cart / transponder, previously described, phase 201, procedure that lasts for the time "t" schematically shown in the timeline of fig. 8, (during which the trigonometric calculation of the position is performed various times), the processing unit, 21, remains in stand by, phase 202, up to a datum time "T" is elapsed since the beginning of said procedure 201; after this, a new procedure of calculation of the position begins through the emission of the radio signal containing the activation code of its transponder, 23.

If during the stand by time, lasting T-t, intervened between the end of the preceding procedure of adoption of the position and the beginning of the following one, the processing unit 21, equipped also with a radio-receiving system, receives a radio signal, phase 203, and verifies if the associated code belongs to a specific list, phase 204, that it stores and continually updates in order to know how many and what other carts, 10, are in the same area. If the code is not in the list, said unit, in fact, adds it to the list itself according to a pre-arranged hierarchy, phase 205.

Insofar, when receiving any transponder activation radio signal, the unit 21 compares the relative code with its own code and with the others in the list and, if the code is, in progressive order, the one immediately preceding its one, once elapsed the time t needed to the accomplishment of the procedure of adoption of the position by the cart that emitted the signal having that specific code, phase 206, it can proceed to effect its own emission of the transponder activation radio signal, otherwise it has to remain in stand by because it is not its turn to transmit yet.

Using the aforesaid algorithm, we obtain, as we can see in fig.8, that within time "T-t", intervening between two following procedures of calculation of the position of a datum cart with respect to its own transponder, take place the procedures of calculation of the mutual positions cart / transponder of a certain number of carts operating in a same area, said number being a function of the relationship between the time "T" and the time "t". All above is possible thanks to the fact that the overlap of the phases of calculation, and therefore the emission of ultrasonic signals by different transponders, is avoided, and so it is avoided also the risk that the signal sent forth by a certain transponder, 23, is received by the sensors and processed by the processing units of carts, 10, different from the one to which said transponder is associated.

Obviously the two algorithms above illustrated also maintain their validity and effectiveness in presence of variations of the temporal parameters and the number of the carts and/or sensors involved in the procedures.

We can also have modifications in the structure of the carts and the sensor units employed, and, in addition, in the location and in the number of said units, still being valid the fact that the trigonometric calculation using the distances from the external source of three sensors univocally determines the mutual position cart / source.

Other changes or modifications can be brought to the invention still remaining in the field of protection defined by the following claims.

## Claims

1. Cart (10) for transporting objects and various goods, in particular on golf courses, of the type comprising:
- at least an electric traction motor (19, 20) associated to at least a wheel (13, 14) of said cart, said motor being fed by a set of accumulators (17, 18) installed on board of the cart (10) and being controlled through an electronic speed regulator;
- at least three separate ultrasonic sensors (22, 28) distributed on said cart (10) and apt to detect the signals coming from an external source (23) of signals;
- a microcomputer control unit (21) which interfaces with said sensors (22, 28) and with said electronic regulator of speed to pilot said at least one electric traction motor;
said cart being **characterized by** the fact that said microcomputer control unit (21) is apt to determine the position of said cart in comparison to said external source (23) through the elaboration of data relating to the signals detected by at least two of said sensor units (22).

2. Cart according to the previous claim **characterized by** the fact that said microcomputer control unit is apt to determine the position of said cart in respect of said external source through the trigonometric calculation of said position effected by using the amounts of the distances of said sensor units with respect to said source, said amounts being estimated by measuring the time intervening between the moment of activation of said external source and the moment of the receipt, by said sensor units, of the ultrasonic signals sent forth by said source as a consequence of said activation.

3. Cart according to claim 1 **characterized in that** said cart has a substantially rectangular shaped plant and that said sensor units are in number of four, located at each corner of said cart.

4. Cart according to the previous claim **characterized in that** each of said sensor units is composed of couples of sensors situated adjoining each other in directions among them perpendicular.

5. Cart according to claim 2 **characterized in that** the trigonometric calculation of the position of the cart in respect of the external source is effected by processing the amounts of the distances of three of said sensor units from said source.

6. Cart according to claim 2 **characterized in that** said microcomputer control unit is apt to determine the position of the cart in respect of said source through an algorithm in which:
a. the position determined by said trigonometric calculation is submitted to a congruence checking with respect to the possible position adopted during a preceding procedure of determination;
b. it is adopted as valid the position that results for the greatest number of times from the trigonometric calculations repeated in sequence, for a pre-determined number of times, on the amounts of the distances of said sensor units from said source, amounts detected from activations of said external source performed in sequence; so eliminating the wrong positions calculated as a consequence of reflections of the signal emitted by said source or as a consequence of other kind of interferences.

7. Cart according to the previous claim **characterized in that** said congruence checking is performed as a function of the distance between said calculated position and said position previously determined, and also as a function of the time intervening between the two procedures performed to determine said positions.

8. Cart according to claim 2 **characterized in that** said microcomputer control unit is apt to determine the position of said cart with respect to said external source according to an algorithm which is useful to avoid interference with other carts operating in the same area, said algorithm providing the separate execution of procedures for determining the positions of the various carts with respect with the relating eternal sources, according to a pre-arranged hierarchy.

9. Cart according to the previous claim **characterized in that** said algorithm provides that:
a. at the end of the procedure of determination of the position of a datum cart with respect to its external source, the processing unit, remains in stand by up to a datum time "T" is elapsed since the beginning of said procedure;
b. if during the stand by time, lasting T-t, intervened between the end of the preceding procedure of adoption of the position and the beginning of the following one, said processing unit, comprising a radio-receiving system, receives a radio signal, and verifies if the associated code belongs to a specific list, that it stores and continually updates in order to know how many and what other carts, are in the same area, adding said code to the list, according to a pre-arranged hierarchy, if said code is not in the list, while, in the case said code is already in the list, said unit compares the relative code with its own code and with the others in the list and, if the code is, in progressive order, the one immediately preceding its one, once elapsed the time t needed to the accomplishment of the procedure of adoption of the position by the cart that emitted the signal having that specific code, it can proceed to effect its own emission of the radio signal of activation of its own external source.

10. Cart for transporting objects and various goods, in particular on golf courses, substantially as described and showed in the appended drawings and for the specified purposes.

## Patentansprüche

1. Wagen (10) zum Transportieren von Gegenständen und verschiedenen Gütern, insbesondere auf Golfplätzen, von dem Typ, der umfasst:
- mindestens einen elektrischen Fahrzeugmotor (19, 20), der mit mindestens einem Rad (13, 14) des Wagens in Verbindung steht, wobei der Motor durch einen Satz von an Bord des Wagens (10) montierten Akkumulatoren (17, 18) gespeist wird und durch einen elektronischen Geschwindigkeitsregler gesteuert wird;
- mindestens drei separate Ultraschallsensoren (22, 28), die auf dem Wagen (10) verteilt sind und dazu geeignet sind, die Signale zu detektieren, die von einer externen Signalquelle (23) herrühren;
- eine Mikrocomputer-Steuereinheit (21), die mit den Sensoren (22, 28) und mit dem elektronischen Geschwindigkeitsregler eine Schnittstelle bildet, um den mindestens einen elektrischen Fahrzeugmotor zu steuern;
wobei der Wagen durch die Tatsache **gekennzeichnet** ist, dass die Mikrocomputer-Steuereinheit (21) dazu geeignet ist, die Position des Wagens gegenüber der externen Quelle (23) durch die Auswertung von Daten zu bestimmen, die mit den durch mindestens zwei der Sensoreinheiten (22) detektierten Signalen in Beziehung stehen.

2. Wagen nach dem vorangehenden Anspruch, **gekennzeichnet durch** die Tatsache, dass die Mikrocomputer-Steuereinheit dazu geeignet ist, die Position des Wagens bezüglich der externen Quelle **durch** die trigonometrische Berechnung der Position zu bestimmen, die bewerkstelligt wird, indem die Größen der Abstände der Sensoreinheiten bezüglich der Quelle verwendet werden, wobei die Größen veranschlagt werden, indem die Zeit gemessen wird, die zwischen dem Aktivierungsaugenblick der externen Quelle und dem Empfangsaugenblick der Unterschallsignale **durch** die Sensoreinheiten liegt, die **durch** die Quelle als Folge der Aktivierung ausgesendet werden.

3. Wagen nach Anspruch 1, **dadurch gekennzeichnet, dass** der Wagen eine im Wesentlichen rechteckförmige Anlage aufweist und dass die Sensoreinheiten, die sich an jeder Ecke des Wagens befinden, in einer Anzahl von vier vorliegen.

4. Wagen nach dem vorangehenden Anspruch, **dadurch gekennzeichnet, dass** jede der Sensoreinheiten aus Sensorpaaren besteht, die aneinander angrenzend in Richtungen liegen, die senkrecht zueinander sind.

5. Wagen nach Anspruch 2, **dadurch gekennzeichnet, dass** die trigonometrische Berechnung der Position des Wagens bezüglich der externen Quelle bewerkstelligt wird, indem die Größen der Abstände von drei der Sensoreinheiten von der Quelle verarbeitet werden.

6. Wagen nach Anspruch 2, **dadurch gekennzeichnet, dass** die Mikrocomputer-Steuereinheit dazu geeignet ist, die Position des Wagens bezüglich der Quelle durch einen Algorithmus zu bestimmen, wobei:
a. die durch die trigonometrische Berechnung bestimmte Position einer Übereinstimmungsprüfung bezüglich der während einer vorhergehenden Bestimmungsprozedur übernommenen möglichen Position unterzogen wird;
b. die Position als zutreffend übernommen wird, die sich für die größte Anzahl von Malen aus den trigonometrischen Berechnungen, die der Reihe nach für eine vorbestimmte Anzahl von Malen wiederholt worden sind, bei den Größen der Abstände der Sensoreinheiten von der Quelle ergibt, bei Größen, die von der Reihe nach ausgeführten Aktivierungen der externen Quelle detektiert worden sind;
damit die falschen Positionen beseitigt werden, die als Folge von Reflexionen des durch die Quelle emittierten Signals oder als Folge einer anderen Art von Störbeeinflussungen berechnet worden sind.

7. Wagen nach dem vorangehenden Anspruch, **dadurch gekennzeichnet, dass** die Übereinstimmungsprüfung als eine Funktion des Abstands zwischen der berechneten Position und der zuvor bestimmten Position und auch als eine Funktion der Zeit, die zwischen den zwei zur Bestimmung der Positionen ausgeführten Prozeduren liegt, ausgeführt wird.

8. Wagen nach Anspruch 2, **dadurch gekennzeichnet, dass** die Mikrocomputer-Steuereinheit dazu geeignet ist, die Position des Wagens bezüglich der externen Quelle entsprechend einem Algorithmus zu bestimmen, der nützlich ist, um eine Störbeeinflussung anderer Wagen, die in demselben Bereich arbeiten, zu vermeiden, wobei der Algorithmus für die separate Ausführung von Prozeduren zur Bestimmung der Positionen der verschiedenen Wagen bezüglich der betreffenden externen Quellen entsprechend einer vorher bestimmten Hierarchie sorgt.

9. Wagen nach dem vorangehenden Anspruch, **dadurch gekennzeichnet, dass** der Algorithmus dafür sorgt, dass:
a. am Ende der Prozedur einer Bestimmung der Position eines gegebenen Wagens bezüglich seiner externen Quelle die Zentraleinheit in Bereitschaft bleibt, bis eine gegebene Zeit "T" seit dem Beginn der Prozedur verstrichen ist;
b. wenn während der Bereitschaftszeit, die T-t lang andauert, die zwischen dem Ende der vorhergehenden Prozedur einer Übernahme der Position und dem Beginn der folgenden Prozedur liegt, die Verarbeitungseinheit, die ein Radioempfangssystem umfasst, ein Radiosignal empfängt, sie dann überprüft, ob der zugehörige Code zu einer spezifischen Liste gehört, die sie speichert und kontinuierlich aktualisiert, um zu wissen, wie viele und welche andere Wagen sich in demselben Bereich befinden, wobei der Code entsprechend einer vorher bestimmten Hierarchie zur Liste hinzugefügt wird, wenn der Code nicht in der Liste ist, während in dem Fall, in dem der Code schon in der Liste ist, die Einheit den jeweiligen Code mit ihrem eigenen Code und mit den anderen in der Liste vergleicht, und, wenn der Code bei zunehmender Reihenfolge derjenige ist, der ihrem Code unmittelbar vorhergeht, sie, sobald die Zeit t verstrichen ist, die für die Durchführung der Prozedur einer Übernahme der Position durch den Wagen benötigt wird, welcher das Signal mit diesem spezifischen Code emittierte, fortfahren kann, um ihre eigene Emission des Radiosignals einer Aktivierung ihrer eigenen externen Quelle zu bewerkstelligen.

10. Wagen zum Transportieren von Gegenständen und verschiedenen Gütern, insbesondere auf Golfplätzen, im Wesentlichen wie beschrieben und in den angefügten Zeichnungen und für die spezifizierten Zwecke dargestellt.

## Revendications

1. Voiturette (10) pour transporter des objets et produits divers, en particulier sur des terrains de golf, du type comprenant :
- au moins un moteur de traction électrique (19, 20) associé à au moins une roue (13, 14) de ladite voiturette, ledit moteur étant alimenté par un ensemble d'accumulateurs (17, 18) installés à bord de la voiturette (10) et étant commandé par un régulateur de vitesse électronique ;
- au moins trois capteurs ultrasoniques séparés (22, 28) répartis sur ladite voiturette (10) et capables de détecter les signaux provenant d'une source externe (23) de signaux ;
- une unité de commande à micro-ordinateur (21) qui s'interface avec lesdits capteurs (22, 28) et avec ledit régulateur électronique de vitesse afin de piloter ledit au moins un moteur de traction électrique ;
ladite voiturette étant **caractérisée par le fait que** ladite unité de commande à micro-ordinateur (21) est capable de déterminer la position de ladite voiturette en comparaison à ladite source externe (23) par l'élaboration de données relatives aux signaux détectés par au moins deux desdites unités de capteurs (22).

2. Voiturette selon la revendication précédente, **caractérisée par le fait que** ladite unité de commande à micro-ordinateur est capable de déterminer la position de ladite voiturette par rapport à ladite source externe par calcul trigonométrique de ladite position effectué en utilisant les valeurs des distances desdites unités de capteurs relativement à ladite source, lesdites valeurs étant estimées en mesurant le temps écoulé entre le moment d'activation de ladite source externe et le moment de la réception, par lesdites unités de capteurs, des signaux ultrasoniques envoyés par ladite source suite à ladite activation.

3. Voiturette selon la revendication 1, **caractérisée en ce que** ladite voiturette a une base de forme sensiblement rectangulaire et lesdites unités de capteurs sont au nombre de quatre, situées à chaque coin de ladite voiturette.

4. Voiturette selon la revendication précédente, **caractérisée en ce que** chacune desdites unités de capteurs est composée de couples de capteurs situés l'un à côté de l'autre dans des sens perpendiculaires entre eux.

5. Voiturette selon la revendication 2, **caractérisée en ce que** le calcul trigonométrique de la position de la voiturette par rapport à la source externe est effectué en traitant les valeurs des distances de trois desdites unités de capteurs depuis ladite source.

6. Voiturette selon la revendication 2, **caractérisée en ce que** ladite unité de commande à micro-ordinateur est capable de déterminer la position de la voiturette par rapport à ladite source par un algorithme dans lequel :
a. la position déterminée par ledit calcul trigonométrique est soumise à une vérification de congruence relativement à la position possible adoptée durant une procédure de détermination précédente ;
b. est adoptée comme position valable la position produite le plus grand nombre de fois à la suite des calculs trigonométriques répétés séquentiellement, pendant un nombre prédéterminé de fois, sur les valeurs des distances desdites unités de capteurs à partir de ladite source, valeurs détectées à partir des activations de ladite source externe exécutées séquentiellement ;
éliminant ainsi les fausses positions calculées suites aux réflexions du signal émis par ladite source ou à la suite d'un autre type d'interférence.

7. Voiturette selon la revendication précédente, **caractérisée en ce que** ladite vérification de congruence est exécutée en fonction de la distance entre ladite position calculée et ladite position déterminée précédemment, et aussi en fonction du temps écoulé entre les deux procédures exécutées pour déterminer lesdites positions.

8. Voiturette selon la revendication 2, **caractérisée en ce que** ladite unité de commande à micro-ordinateur est capable de déterminer la position de ladite voiturette par rapport à ladite source externe selon un algorithme qui sert à éviter les interférences avec d'autres voiturettes fonctionnant dans la même zone, ledit algorithme permettant l'exécution séparée de procédures de détermination des positions des diverses voiturettes relativement aux sources externes associées, conformément à une hiérarchie pré-établie.

9. Voiturette selon la revendication précédente, **caractérisée en ce que** ledit algorithme fait en sorte que :
a. à la fin de la procédure de la détermination de la position d'une voiturette de référence par rapport à sa source externe, l'unité de traitement, reste en état de veille jusqu'à ce qu'un temps de référence "T" se soit écoulé depuis le début de ladite procédure ;
b. si durant le temps de veille, durant T-t, s'écoulant entre la fin de la procédure précédente d'adoption de la position et le début de la procédure suivante, ladite unité de traitement, comprenant un système récepteur radio, reçoit un signal radio, et vérifie si le code associé appartient à une liste spécifique, qu'elle mémorise et actualise régulièrement pour savoir combien d'autres voiturettes, et lesquelles, se trouvent dans la même zone, ladite unité ajoutant ledit code à la liste, conformément à une hiérarchie pré-établie, si ledit code ne se trouve pas sur la liste, et le comparant à son propre code et aux autres dans la liste si ledit code se trouve déjà dans la liste, et, si le code est, dans l'ordre progressif, celui précédant immédiatement le sien, une fois que s'est écoulé le temps t requis pour la réalisation de la procédure d'adoption de la position par la voiturette qui a émis le signal ayant ce code spécifique, elle peut entreprendre sa propre émission du signal radio d'activation de sa propre source externe.

10. Voiturette de transport d'objets et de produits divers, en particulier sur des terrains de golf, sensiblement telle que décrite et montrée dans les dessins annexés et aux fins spécifiées.
